# EUROPEAN PATENT SPECIFICATION

(11) **EP 0 828 338 B1**
(45) Date of publication and mention of the grant of the patent: **04.12.2002**
(21) Application number: 97202708.0
(22) Date of filing: 03.09.1997
(51) Int. Cl.: H02K 7/12, B23Q 5/54

(54) **Locking device for the releasable coupling of the rotor of an electric spindle**
Verriegelungseinrichtung einer lösbaren Kupplung des Rotors einer elektrischen Spindel
Dispositif de verrouillage d'un embrayage mobile pour un rotor d'une broche électrique

(30) Priority: 09.09.1996 IT MI961852
(43) Date of publication of application: 11.03.1998
(73) Proprietor: F.M. Elettromeccanica s.r.l., 06034 Foligno (PG) (IT)
(72) Inventor: Marelli, Flavio, 20036 Meda (MI) (IT); Annoni, Giorgio, 20036 Meda (MI) (IT); Zappa, Flavio, 20042 Albiate (MI) (IT)
(74) Representative: Mittler, Enrico

(56) References cited:
- EP-A- 0 525 405
- EP-A- 0 743 511
- DE-C- 851 089
- US-A- 5 100 271
- US-A- 5 108 236

## Description

The present invention concerns an electric spindle with a rotatable member axially extractable from a static member.

Conventionally, for example as disclosed in EP-A-0 525 405, electric spindles for machine tools comprise a rotatable member, which comprises a spindle shaft provided with means for coupling a tool thereto. The rotatable member is coupled to the static member by means of bearings.

A problem affecting conventional electric spindles is due to seizure of the bearings. When this occurs, the bearings are to be replaced. This operation must be carried out by skilled technicians, and involves disassembly of the electric spindle, so as to separate the rotatable member, bearings included, and replacement of the seized bearings.

This naturally requires to keep the machine tool unoperable for possibly long times, causing a significant reduction in productivity.

In view of the state of the art described, it is an object of the present invention that of providing a locking device for the releasable coupling of the rotatable member of the electric spindle to the stator thereof, allowing for overcoming the above-mentioned problem, making thus easy a prompt replacement of the rotatable member.

According to the present invention, such an object is achieved by means of an electric spindle as defined in claim 1.

Thanks to the present invention, the substitution of the rotatable member of the electric spindle is extremely easy and fast to carry out, and can be performed directly by the user. Advantageously, it is possible to sell of a set comprising a static member and a plurality of rotatable member interchangeably couplable to the static member by means of a locking device according to the invention. In case of seizure of the bearings, the user can immediately and easily replace the rotatable member, without having to leave the machine tool inoperable for long times.

These and other features and advantages of the present invention will be made apparent by the following detailed description of a particular embodiment thereof, illustrated as a non-limiting example in the annexed drawings, wherein:
Figure 1 shows in axial cross-section section along a longitudinal plane an electric spindle equipped with a locking device according to the present invention, in a locking position;
Figure 2 is similar to Figure 1, but shows the locking device in an unlocked position with a rotatable assembly of the electric spindle partially extracted;
Figure 3 is a cross-section along line III-III in Figure 1;
Figure 4 is a cross-section along line IV-IV in Figure 2; and
Figure 5 shows, in a view similar to that of Figure 1, the electric spindle during an unlocking procedure of a tool.

With reference to the drawings, there is shown an electric spindle comprising a static member made up of an internally hollow casing 1, within which a stator 2 of an electric motor is fixedly mounted, and a rotatable member rotatably housed within the static member and comprising a spindle shaft 3 with a rotor 4 of the electric motor fixedly mounted externally to the spindle shaft; two bearings 5 and 6 are further keyed onto the spindle shaft 3 for the rotatable coupling of the latter to the static member.

The rotatable member further comprises a rod 7 slideably housed within the spindle shaft 3 for unlocking a (not shown) tool mounted on the spindle shaft. On the back of the casing 1 a cylinder-piston assembly is mounted comprising a cylinder 8 slideably housing a piston 9 activatable by means of a pressurized fluid. The cylinder-piston assembly is mounted to the casing 1 by means of a reaction flange.

At the back of the cylinder-piston assembly a cooling fan 11 is mounted to a box-like frame 12 enclosing the cylinder-piston assembly and the reaction flange 10. The box-like frame is attached to the casing 1 by means of vibration-dumping clamping members comprised in the shown example of screws 13 inserted in expansion rubber bushes 14, housed in respective holes provided in the casing; when the screws are fastened, the bushes expand within the respective holes and assure the clamping of the frame 12 to the casing 1. The rubber bushes 14 absorb the high-frequency vibrations of the casing 1 when the electric spindle is in operation, and prevent said vibrations from being transmitted to the cooling fan 11, which could otherwise be damaged.

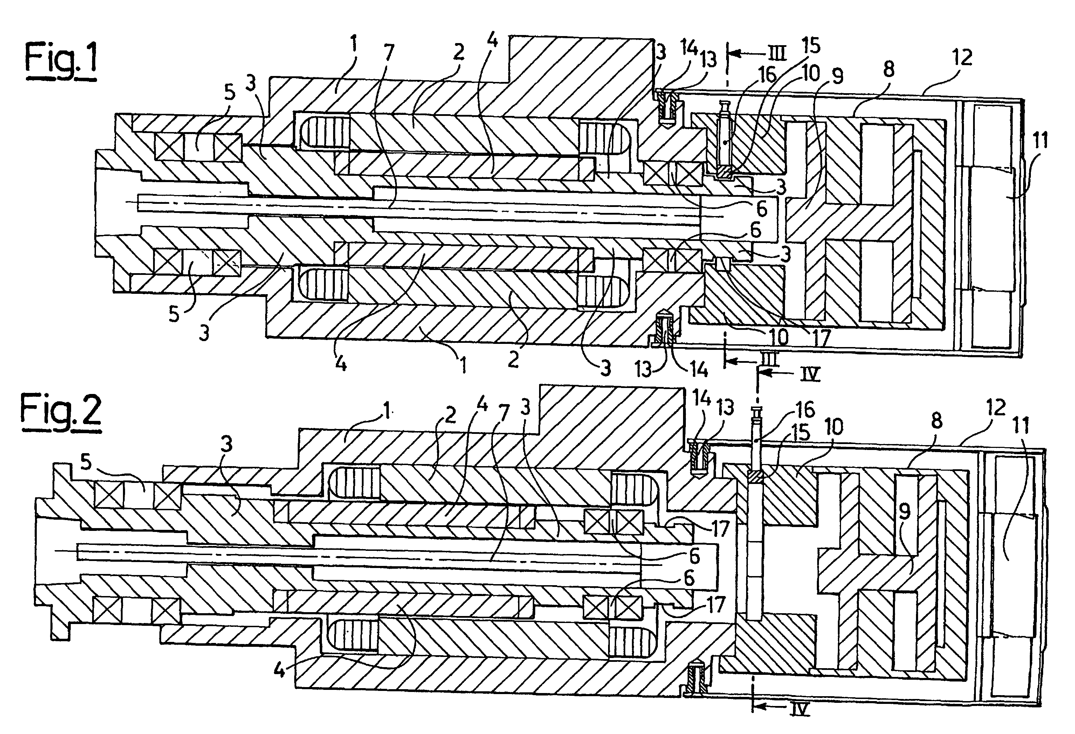

Inside the reaction flange 10 there is provided a seat for slideably housing a sliding drawer 15, slidable transversally to the axis of the spindle shaft 3. Through a driving rod 16, ending with a threaded end screwed into the drawer 15 and extending to the outside of the reaction flange 10, the drawer 15 can be activated so as to be moved from a lowered position, shown in Figure 1, wherein the drawer engages a circumferential slot 17 provided on the spindle shaft 3 so as to axially lock the spindle shaft, to a risen position, shown in Figure 2, wherein the drawer 15 clears the slot 17 so as to allow the axial movement of extraction of the rotatable member (spindle shaft, rotor, bearings, tool unlocking rod) from the static member of the electric spindle.

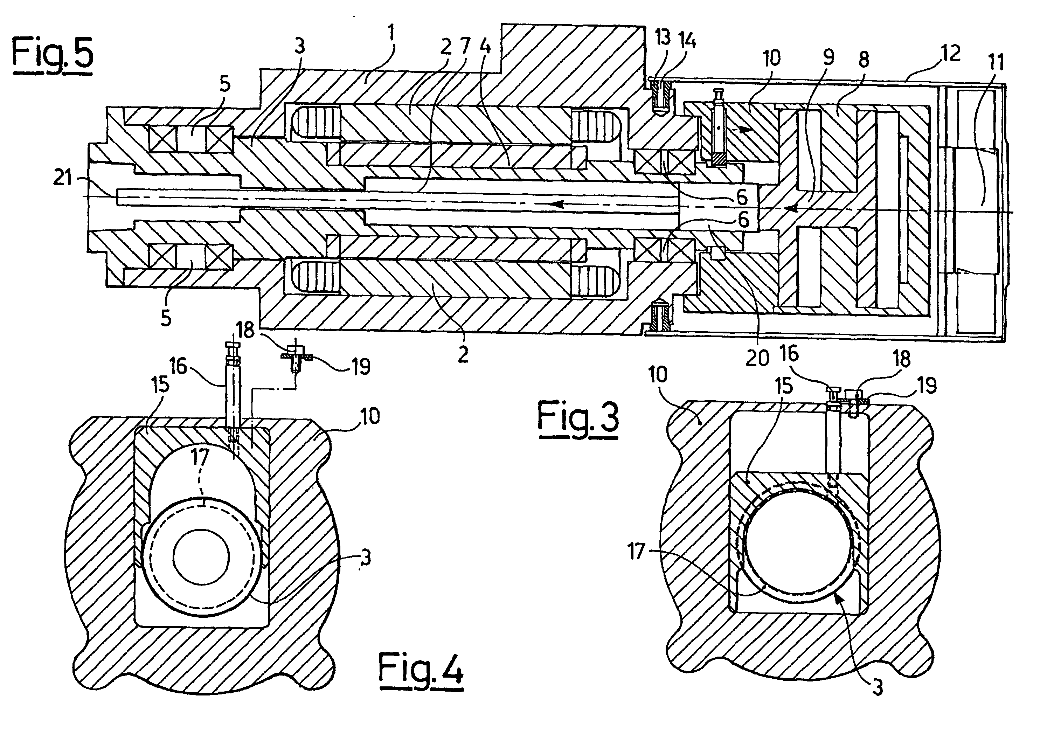

The operation of the drawer 15 is clearly visible in detail in the cross-sections of Figures 3 and 4. In Figure 3, referring to the condition in which the axial movement of the spindle shaft 3 is locked and thus prevented, the drawer 15 is in the lowered position and engages with the slot 17 of the spindle shaft 3. It is further visible a locking screw 18 screwed into the reaction flange 10 so to lock, through a washer 19, the drive rod 16 of the drawer 15. Figure 4 refers instead to the condition wherein the drawer is risen so as to clear the slot 17 of the spindle shaft 3; to this purpose, the locking screw 18 has been removed, and the drive rod 16 has been risen to draw the drawer 15 from the lowered position of Figure 3 to the risen position of Figure 4.

In Figure 5 there is shown the operation of the reaction flange 10. During an unlocking operation of a tool (not shown) that is attached frontally to the spindle shaft 3, a compressed fluid is introduced in the cylinder 8 so as to determine the sliding ahead of piston 9. Piston 9, beating against a head 20 of the unlocking rod 7, causes the latter to slide ahead; the front end 21 of the unlocking rod 7, acting on the tool attached to the spindle shaft 3, will cause the tool be unlocked. The width of the slot 17 is made larger than the thickness of the drawer 15, so that when piston 9 moves ahead under the action of the compressed fluid, the force acting on the cylinder due to the action-reaction principle makes the cylinder and the reaction flange fixed thereto move rearwardly; such a dynamic reaction transmits, through the drawer 15, to the spindle shaft 3, and compensates the axial thrust exerted on piston 9 so as to cancel the thrust. In this way it is possible to prevent the thrust from discharging onto the bearings 5 and 6, negatively affecting the life thereof.

The invention has been so far described making reference to one possible embodiment thereof. However, as clearly appears to any one skilled in the art, other embodiments are possible, all falling in the scope of the invention as defined in the annexed claims.

## Claims

1. Electric spindle comprising a static member (1,2,8-10), a rotatable member (3-7) axially extractable from the static member (1,2,8-10) and a locking device for the releasable coupling of the rotatable member (3-7) of an electric spindle to the static member (1,2,8-10) thereof, the rotatable member comprising a spindle shaft (3) housed within the static member and rotatably mounted thereto by means of bearing means (5,6), **characterized in that** said locking device comprise an axial holding means (15) for the spindle shaft, said axial holding means being housed in a respective sliding seat provided in said static member and being capable of being moved transversally to the spindle shaft between a locking position in which said axial holding means engages respective hooking means (17) provided on said spindle shaft, and an unlocked position in which said axial holding means is disengaged from said hooking means, thereby the rotatable member can be decoupled from said static member.

2. Electric spindle according to claim 1, **characterized in that** said axial holding means comprises a drawer (15) slidable transversally to the axis of the spindle shaft (3), and said hooking means are comprised of a circumferential slot (17) provided on an external surface of the spindle shaft.

3. Electric spindle according to claim 2, **characterized by** comprising drive means (16) for driving the sliding of said axial holding means (15).

4. Electric spindle according to claim 3, **characterized in that** said driving means comprises a drive rod (16) fixed at one end thereof to the drawer (15) and having the other end protruding externally from the static member (1,2,8-10).

5. Electric spindle according to claim 4, **characterized in that** means (18,19) are provide for the releasable locking of the drive rod (16).

6. Electric spindle according to any one of the preceding claims, **characterized in that** said rotatable member (3-7) comprises an unlocking rod (7) for unlocking a tool mounted to the spindle shaft (3), the unlocking rod (7) slideably housed in the spindle shaft, and **in that** said static member (1,2,8-10) comprises a cylinder-piston assembly (8,9) for causing the displacement of the unlocking rod to determine unlocking of the tool.

7. Electric spindle according to claim 6, **characterized in that** said cylinder-piston assembly (8,9) is coupled to a casing (1) of the electric spindle by means of a reaction flange (10).

8. Electric spindle according to claim 7, **characterized in that** said sliding seat of the axial holding means (15) is formed in said reaction flange (10).

9. Electric spindle according to claim 8, **characterized in that** said axial holding means (15) and said hooking means (17) cooperates so as to guarantee at least a limited axial clearance, so as to compensate by way of reaction an axial thrust of said piston (9).

10. Electric spindle according to any one of the preceding claims, **characterized in that** a ventilation assembly (11) of the electric spindle is provided, said ventilation assembly being fixed to the static member (1,2,8-10) by means of vibration dumping elements (13,14).

11. Electric spindle according to claim 10, **characterized in that** said vibration dumping elements comprises screws (13) inserted in expansion bushes (14) of a material suitable for absorbing vibrations.

12. Set for electric spindle, **characterized by** comprising a static member and a plurality of rotatable members which can be interchangeably associated to said static member by means of a locking device according to any one of claims 1 to 11.

## Patentansprüche

1. Elektrische Welle, umfassend ein ruhendes Teil (1,2,8-10) und ein drehbares Teil (3-7), welches aus dem ruhenden Teil (1,2,8-10) axial herausziehbar ist, und eine Sperrvorrichtung für die auslösbare Kupplung des drehbaren Teils (3-7) einer elektrischen Welle mit ihrem ruhenden Teil (1,2,8-10), wobei das drehbare Teil einen Wellenschaft (3) umfasst, der im ruhenden Teil eingebaut ist, und an ihm drehbar mit Hilfe von Lagervorrichtungen (5,6) montiert ist, **dadurch gekennzeichnet, dass** die Sperrvorrichtung eine axiale Haltevorrichtung (15) für den Wellenschaft umfasst, wobei die Haltevorrichtung in einem jeweiligen Gleitsitz eingebaut ist, der im ruhenden Teil vorgesehen ist und quer zum Wellenschaft zwischen einer Feststellposition, in welcher die axiale Haltevorrichtung die jeweilige Einrastvorrichtung (17) einrastet, die auf dem Wellenschaft vorgesehen ist, und einer entriegelten Position bewegt werden kann, in welcher die axiale Haltevorrichtung aus der Einrastvorrichtung ausgerastet ist, wobei auf diese Weise das drehbare Teil aus dem ruhenden Teil ausgekuppelt werden kann.

2. Elektrische Welle nach Anspruch 1, **dadurch gekennzeichnet, dass** die axiale Haltevorrichtung einen Auszieher (15) umfasst, der quer zur Achse des Wellenschaftes (3) verschiebbar ist, und die Einrastvorrichtung eine Rille (17) über dem Umfang umfasst, die auf der äußeren Oberfläche des Wellenschaftes vorgesehen ist.

3. Elektrische Welle nach Anspruch 2, **dadurch gekennzeichnet, dass** sie eine Antriebsvorrichtung (16) für den Antrieb des Gleitens der axialen Haltevorrichtung (15) umfasst.

4. Elektrische Welle nach Anspruch 3, **dadurch gekennzeichnet, dass** die Antriebsvorrichtung einen Antriebsstab (16) umfasst, der mit einem Ende am Auszieher (15) angebracht ist, und dessen anderes Ende außen aus dem ruhenden Teil (1,2,8-10) herausragt.

5. Elektrische Welle nach Anspruch 4, **dadurch gekennzeichnet, dass** Vorrichtungen (18,19) für das auslösbare Verriegeln des Antriebsstabes (16) vorgesehen sind.

6. Elektrische Welle nach einem der vorangegangenen Ansprüche, **dadurch gekennzeichnet, dass** der drehbare Teil (3-7) einen Entriegelungsstab (7) für das Entriegeln eines Werkzeugs umfasst, das am Wellenschaft (3) angebracht ist, wobei Entriegelungsstab (7) verschiebbar im Wellenschaft eingebaut ist, und dass der ruhende Teil (1,2,8-10) eine Zylinder-Kolben-Baugruppe (8,9) für das Herbeiführen der Verschiebung des Entriegelungsstabs umfasst, um das Entriegeln des Werkzeugs zu bestimmen.

7. Elektrische Welle nach Anspruch 6, **dadurch gekennzeichnet, dass** die Zylinder-Kolben-Baugruppe (8,9) mit einem Gehäuse (1) der elektrischen Welle mit Hilfe eines Reaktionsflansches (10) gekoppelt ist.

8. Elektrische Welle nach Anspruch 7, **dadurch gekennzeichnet, dass** der Gleitsitz der axialen Haltevorrichtung (15) im Reaktionsflansch (10) ausgebildet ist.

9. Elektrische Welle nach Anspruch 8, **dadurch gekennzeichnet, dass** die axiale Haltevorrichtung (15) und die Einrastvorrichtung (17) zusammenwirken, um mindestens ein begrenztes axiales Spiel zu garantieren, um durch die Reaktion einen axialen Schub des Kolbens (9) auszugleichen.

10. Elektrische Welle nach einem der vorangegangenen Ansprüche **dadurch gekennzeichnet, dass** eine Lüftungsbaugruppe (11) der elektrischen Welle vorgesehen ist, wobei die Lüftungsbaugruppe am ruhenden Teil (1,2,8-10) mit Hilfe von Schwingungsdämpfungselementen (13,14) angebracht ist.

11. Elektrische Welle nach Anspruch 10, **dadurch gekennzeichnet, dass** die Schwingungsdämpfungselemente Schrauben (13) umfassen, die in Dehnungsbuchsen (14) aus einem Material eingelegt sind, das für die Dämpfung von Schwingungen geeignet ist.

12. Satz für elektrische Welle, **dadurch gekennzeichnet, dass** er einen ruhenden Teil und eine Vielzahl von drehbaren Teilen umfasst, die austauschbar dem ruhenden Teil mit Hilfe einer Sperrvorrichtung nach einem der Ansprüche 1 bis 11 zugeordnet werden können.

## Revendications

1. Broche électrique comprenant un organe statique (1, 2, 8-10), un organe rotatif (3-7) qui peut être extrait axialement de l'organe statique (1, 2, 8-10), et un dispositif de verrouillage destiné à assurer le couplage temporaire de l'organe rotatif (3-7) d'une broche électrique à l'organe statique (1, 2, 8-10) de celle-ci, l'organe rotatif comprenant un arbre (3) de broche logé dans l'organe statique et monté afin qu'il puisse tourner par rapport à celui-ci sur un dispositif à palier (5, 6), **caractérisée en ce que** le dispositif de verrouillage comprend un dispositif (15) de maintien axial de l'arbre de broche, le dispositif de maintien axial étant logé dans un siège coulissant respectif placé dans l'organe statique et pouvant être déplacé transversalement à l'arbre de broche entre une position de verrouillage dans laquelle le dispositif de maintien axial coopère avec un dispositif respectif d'accrochage (17) formé sur l'arbre de broche, et une position déverrouillée dans laquelle le dispositif de maintien axial est séparé du dispositif d'accrochage, si bien que l'organe rotatif peut être découplé de l'organe statique.

2. Broche électrique selon la revendication 1, **caractérisée en ce que** le dispositif de maintien axial comporte un tiroir (15) qui peut coulisser transversalement à l'axe de l'arbre de broche (3), et le dispositif d'accrochage est constitué d'une fente circonférentielle (17) placée à une surface externe de l'arbre de broche.

3. Broche électrique selon la revendication 2, **caractérisée en ce qu'**elle comprend un dispositif d'entraînement (16) destiné à assurer le coulissement du dispositif de maintien axial (15).

4. Broche électrique selon la revendication 3, **caractérisée en ce que** le dispositif d'entraînement comporte une tige d'entraînement (16) fixée à une première extrémité au tiroir (15) et dont l'autre extrémité dépasse à l'extérieur de l'organe statique (1, 2, 8-10).

5. Broche électrique selon la revendication 4, **caractérisée en ce qu'**un dispositif (18, 19) est destiné à assurer le verrouillage temporaire de la tige d'entraînement (16).

6. Broche électrique selon l'une quelconque des revendications précédentes, **caractérisée en ce que** l'organe rotatif (3-7) comporte une tige de déverrouillage (7) destinée à déverrouiller un outil monté sur l'arbre de broche (3), la tige de déverrouillage (7) étant logée de façon coulissante dans l'arbre de broche, et **en ce que** l'organe statique (1, 2, 8-10) comprend un ensemble à cylindre et piston (8, 9) destiné à provoquer le déplacement de la tige de déverrouillage pour déterminer le déverrouillage de l'outil.

7. Broche électrique selon la revendication 6, **caractérisée en ce que** l'ensemble à cylindre et piston (8, 9) est couplé à un carter (1) de la broche électrique par un flasque de réaction (10).

8. Broche électrique selon la revendication 7, **caractérisée en ce que** le siège de coulissement du dispositif de maintien axial (15) est formé dans le flasque de réaction (10).

9. Broche électrique selon la revendication 8, **caractérisée en ce que** le dispositif de maintien axial (15) et le dispositif d'accrochage (17) coopèrent pour garantir au moins un jeu axial limité, afin qu'une poussée axiale du piston (9) soit compensée par réaction.

10. Broche électrique selon l'une quelconque des revendications précédentes, **caractérisée en ce qu'**un ensemble de ventilation (11) de la broche électrique est incorporé, l'ensemble de ventilation étant fixé à l'organe statique (1, 2, 8-10) par des éléments d'amortissement de vibration (13, 14).

11. Broche électrique selon la revendication 10, **caractérisée en ce que** les éléments d'amortissement de vibration comportent des vis (13) insérées dans des manchons de dilatation (14) d'un matériau qui convient à l'absorption des vibrations.

12. Ensemble pour broche électrique, **caractérisé en ce qu'**il comprend un organe statique et plusieurs organes rotatifs qui peuvent être associés de façon interchangeable à l'organe statique par un dispositif de verrouillage selon l'une quelconque des revendications 1 à 11.
